# FASCICULE DE BREVET EUROPEEN

(11) **EP 3 181 775 B1**
(45) Date de publication et mention de la délivrance du brevet: **18.07.2018**
(21) Numéro de dépôt: 16204405.1
(22) Date de dépôt: 15.12.2016
(51) Int. Cl.: E04D 1/24, E04D 1/30, E04D 11/00, E04D 1/04

(54) **TOITURE VÉGÉTALISÉE**
GRÜNDACH
GREEN ROOF

(30) Priorité: 16.12.2015 FR 1562479
(43) Date de publication de la demande: 21.06.2017
(73) Titulaire: Terreal, 92150 Suresnes (FR); Ecole Nationale Supérieure d'Architecture de Lyon, 69512 Vaulx-En-Velin Cedex (FR)
(72) Inventeur: MALE, Philippe, 31500 TOULOUSE (FR); VINCENT, Paul, 33140 VILLENAVE D'ORNON (FR); MORLÉ, Estelle, 69600 OULLINS (FR); RITZ, Emmanuel, 73000 CHAMBERY (FR)
(74) Mandataire: Loyer & Abello

(56) Documents cités:
- EP-A1- 0 034 736
- EP-A1- 1 059 396
- BE-A- 624 747
- CH-A5- 592 220
- DE-A1- 10 330 318
- DE-A1- 19 820 254
- DE-A1-102006 019 565
- GB-A- 330 340
- GB-A- 2 347 944
- JP-A- H07 231 722
- JP-U- H0 540 445
- SE-B- 414 804

## Description

### Domaine technique

La présente invention concerne le domaine de ce qu'il est connu d'appeler toiture végétalisée, c'est-à-dire une toiture comportant des moyens permettant de la recouvrir de végétaux décoratifs.

L'invention concerne plus particulièrement une toiture comportant un dispositif de couverture pour toiture végétalisée.

### Arrière-plan technologique

Dans l'état de la technique, il est connu des toitures végétalisées. Toutefois, leur structure ainsi que leur mise en place sont relativement complexes.

En particulier, le document DE102006019565 divulgue des tuiles pour une toiture végétalisée. Toutefois, ces tuiles présentent une forme complexe qui est difficile à réaliser et ne peut être obtenue par un procédé simple et peu coûteux à **mettre en oeuvre.**

Le document EP0034736 divulgue une toiture selon le préambule de la revendication 1.

### Résumé

L'invention vise à remédier ces problèmes en proposant une toiture végétalisée qui soit simple et de mise en oeuvre aisée.

Pour ce faire, selon un mode de réalisation, l'invention fournit une toiture végétalisée selon la revendication 1.

En d'autres termes, le dispositif de couverture de la toiture revendiquée comporte des tuiles céramiques dont la forme est telle qu'elles comportent une partie médiane plane en creux, encadrée sur ses côtés avant et arrière par deux rebords en saillie qui permettent de retenir le substrat.

En outre, les tuiles présentent une section constante selon une direction parallèle aux rebords avant et arrière et sont ainsi obtenues par un procédé d'extrusion qui est simple et peu coûteux à mettre en oeuvre.
- Selon un mode de réalisation, les tuiles sont destinées à être assemblées de manière étanche. Ainsi, les tuiles céramiques assurent une double fonctionnalité, à savoir, d'une part, d'assurer la couverture étanche de la toiture, et, d'autre part, d'assurer le logement du substrat recouvert de végétaux.
- Selon un mode de réalisation, le rebord avant de chaque tuile est apte à recouvrir le rebord arrière d'une autre tuile adjacente, disposée vers l'avant, de manière à assurer l'étanchéité du dispositif de couverture.
- Selon l'invention, pour chacune des tuiles, deux joues sont fixées perpendiculairement aux rebords avant et arrière, de part et d'autre de la portion médiane et ferment latéralement l'espace de logement apte à recevoir le substrat.
- Les joues sont par exemple des plaques rectangulaires. Les joues peuvent notamment être en plastique.
- Selon un mode de réalisation, les joues sont perforées.
- Chaque tuile est une tuile creuse munie d'alvéoles, les alvéoles s'étendant d'un bout à l'autre de la tuile selon une direction parallèle aux directions des rebords avant et arrière.
- Selon l'invention, chacune des joues comporte des plots de fixation s'emboitant chacun dans l'une des alvéoles. Ainsi, les joues viennent se fixer à l'intérieur des alvéoles.
- Dans un mode de réalisation, la tuile est une tuile monolithe de grandes dimensions, par exemple d'environ 100cm sur 60cm
- Selon un mode de réalisation, la partie médiane est plane et les rebords avant et arrière se redressent perpendiculairement à la partie médiane de telle sorte que l'espace de logement présente une forme parallélépipédique.
- Dans un mode de réalisation, le rebord avant présente une extrémité recourbée faisant saillie vers l'avant et comportant une face inférieure qui présente une inclinaison identique à une face supérieure du rebord arrière, de telle sorte que ladite face inférieure de l'extrémité recourbée du rebord avant est apte à venir reposer contre la face supérieure du rebord arrière d'un autre tuile adjacente, disposée à l'avant. Dès lors, lesdits rebords avant et arrières desdites tuiles adjacentes s'emboitent l'un dans l'autre.
- Dans un mode de réalisation, la face supérieure de l'extrémité recourbée est arrondie.
- Selon un mode de réalisation, le rebord arrière comporte une portion de retenue faisant saillie vers le bas qui est apte à coopérer avec un élément de la structure porteuse de manière à assurer une retenue de ladite tuile sur la structure porteuse.
- Selon un mode de réalisation, le rebord avant présente une face inférieure pourvue d'une rainure et le rebord arrière comporte un ergot qui fait saillie vers l'arrière depuis le rebord arrière et présente une forme complémentaire à ladite rainure; ladite rainure étant apte à s'emboîter avec l'ergot du rebord arrière d'une autre tuile adjacente, disposée à l'avant.
- Selon un mode de réalisation la partie médiane est plane et le rebord avant est incliné vers l'avant par rapport à la partie médiane et comporte une extrémité recourbée vers le bas formant un crantage apte à venir se positionner contre une face avant du rebord arrière d'une autre tuile adjacente, disposée à l'avant.
- Selon un mode de réalisation, lorsque le rebord avant est incliné vers l'avant, la face supérieure du rebord arrière présente une inclinaison identique à celle du rebord avant de telle sorte que le rebord avant d'une tuile vienne reposer contre la face supérieure inclinée du rebord arrière d'une autre tuile adjacente, disposée à l'avant.
- Selon un mode de réalisation, le rebord arrière présente une extrémité supérieure faisant saillie vers l'avant de manière à ménager à la base du rebord arrière une cavité apte à recevoir un tuyau d'irrigation.
- Selon un mode de réalisation, un tuyau d'irrigation est disposé dans l'espace de logement du substrat, de préférence à la base du rebord arrière.
- Selon un mode de réalisation la partie médiane est munie de rainures s'étendant par exemple selon une direction parallèle aux rebords avant et arrière.
- Selon un mode de réalisation, la structure porteuse comporte un ou plusieurs panneaux assurant l'étanchéité de la structure porteuse.

Selon un mode de réalisation, l'invention fournit également une toiture végétalisée précitée comportant une structure porteuse, un dispositif de couverture précité, fixé sur la structure porteuse, et une pluralité de substrats recouverts par des végétaux reçus chacun dans l'espace de logement de l'une des tuiles.

Selon un mode de réalisation, les tuiles sont agencées sur la structure porteuse sous la forme d'une pluralité de rangées parallèles qui s'allongent selon des directions perpendiculaires aux directions des rebords avant et arrière et qui sont séparées les unes des autres par des interstices.

Selon un mode de réalisation, la structure porteuse comporte un profilé en U permettant l'écoulement des eaux pluviales qui est disposé le long de chacun des interstices entre deux rangées adjacentes.

Selon un mode de réalisation, un treillis métallique est disposé dans l'espace de logement de chacune des tuiles.

Selon un mode de réalisation, les joues sont fixées au treillis métallique.

### Brève description des figures

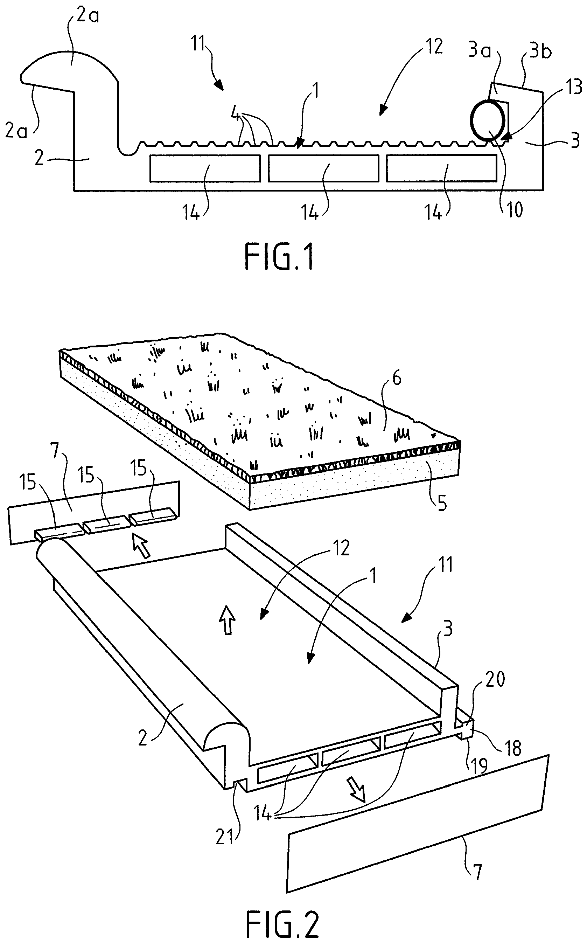

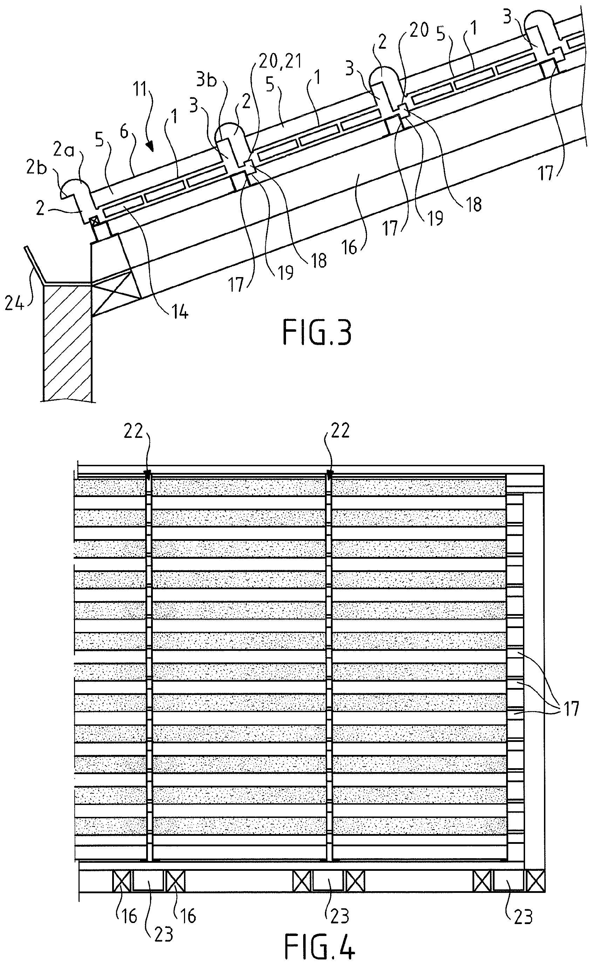

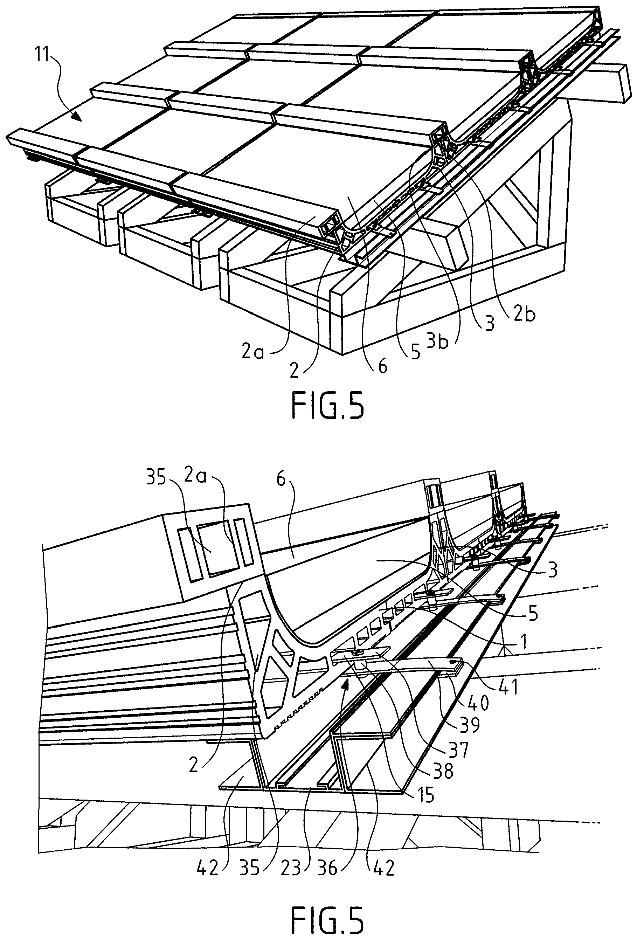

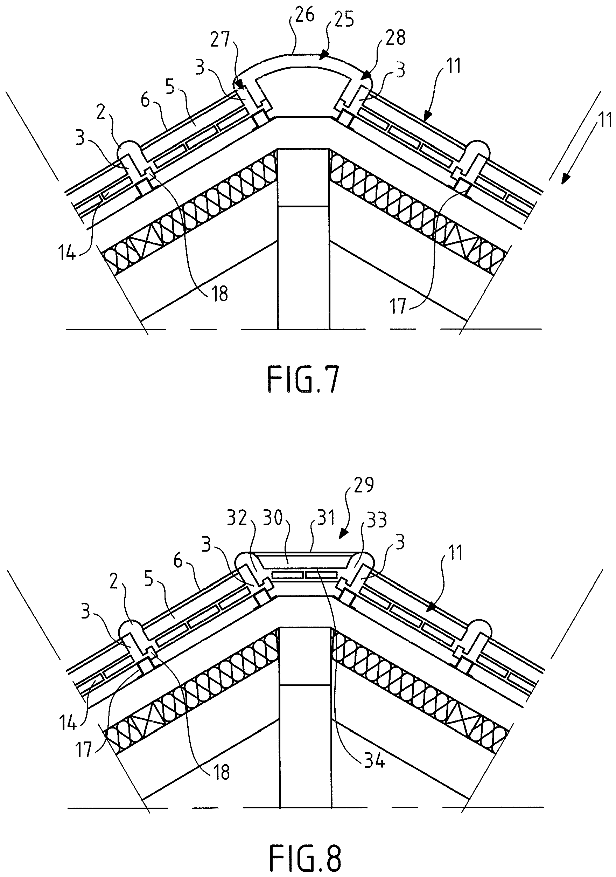

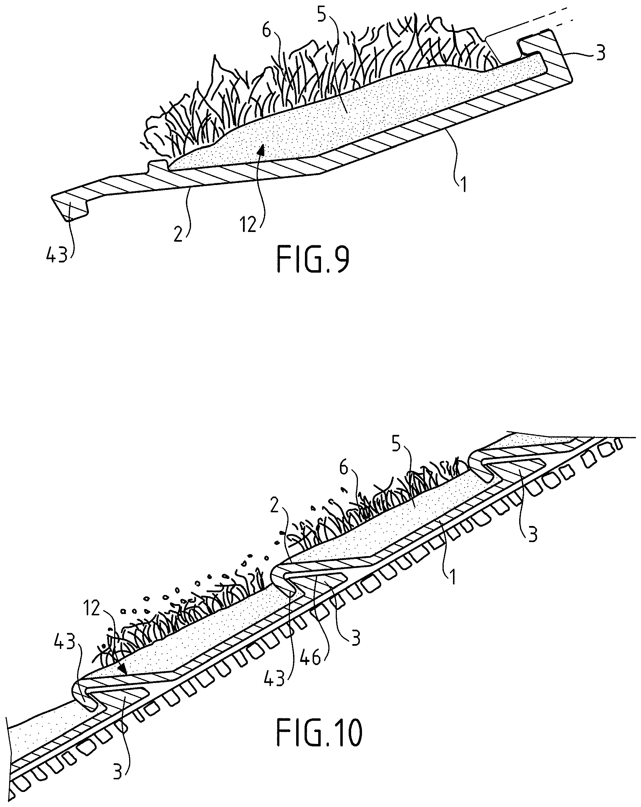

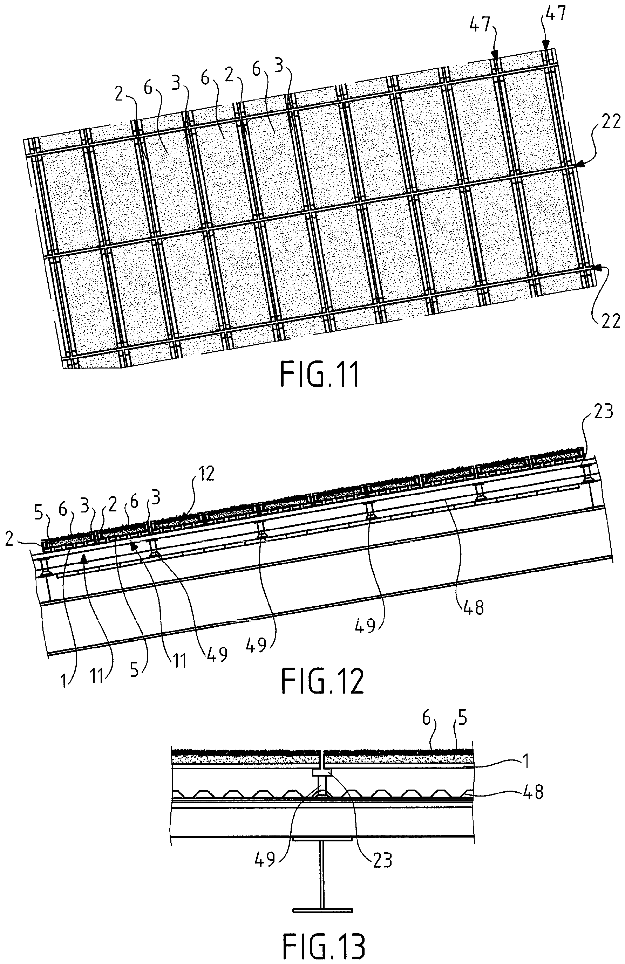

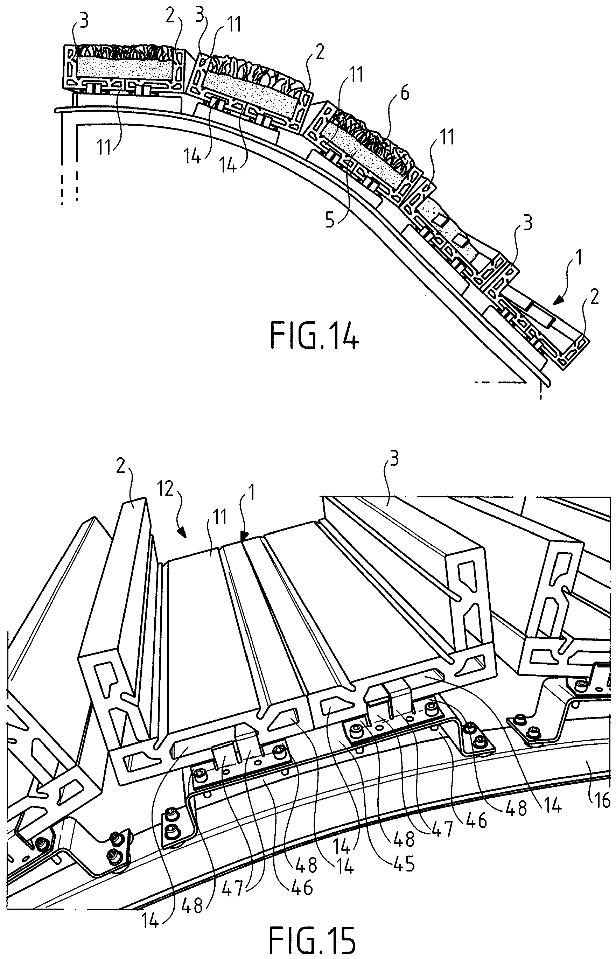

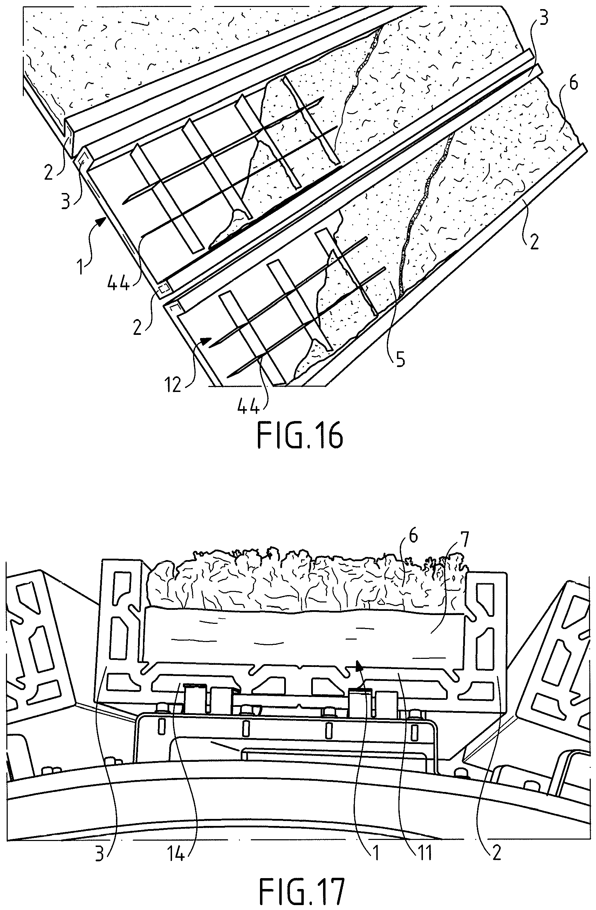

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue en coupe transversale d'une tuile utilisable dans une toiture selon un premier mode de réalisation.
- **La** **figure 2** est une vue en perspective éclatée d'un ensemble constituée d'une tuile, d'un substrat recouvert de sedum et de joues destinées à être fixées sur la tuile afin de fermer latéralement l'espace de logement du substrat.
- **La** **figure 3** est une vue en coupe d'une toiture recouverte par un dispositif de couverture comportant une pluralité d'ensemble tels que représentés sur la figure 2.
- **La** **figure 4** est une vue schématique avant d'un pan de la toiture représentée sur la figure 3.
- **La** **figure 5** est une vue en perspective d'un pan d'une toiture selon un autre mode de réalisation non revendiqué,
- **La** **figure 6** est une vue de détail de la figure 5.
- **La** **figure 7** est une vue de détail illustrant un faitage selon un mode de réalisation.
- **La** **figure 8** est une vue de détail illustrant un faitage selon un autre mode de réalisation.
- **La** **figure 9** illustre une tuile selon un autre mode de construction qui ne fait pas partie de l'invention.
- **La** **figure 10** est une vue partielle d'une toiture végétalisée réalisée avec des tuiles selon un autre mode de construction qui ne fait pas partie de l'invention.
- **La** **figure 11** est une vue partielle d'une toiture végétalisée selon un autre mode de construction qui ne fait pas partie de l'invention.
- **La** **figure 12** est une vue en coupe de la toiture de la figure 11 selon un plan longitudinal s'étendant d'avant en arrière.
- **La** **figure 13** est une vue en coupe de la toiture de la figure 11 selon un plan transversal perpendiculaire au plan longitudinal s'étendant d'avant en arrière.
- **La** **figure 14** est une vue latérale en perspective d'une toiture végétalisée selon un autre mode de réalisation (joues non représentées).
- **La** **figure 15** est une vue latérale en perspective de l'une des tuiles de la toiture végétalisée de la figure 14.
- **La** **figure 16** est une vue partielle en perspective de la toiture végétalisée de la figure 14, dans laquelle l'espace de logement des tuiles n'est pas intégralement rempli de substrat afin de permettre l'observation des treillis.
- **La** **figure 17** est une vue latérale de l'une des tuiles de la toiture végétalisée de la figure 14 selon une variante de réalisation, où les joues fixées par les plots de fixation dans les alvéoles ne sont pas représentées.

### Description détaillée de modes de réalisation

Dans la description et les revendications, les termes "avant" et "arrière" sont utilisés pour définir la position relative d'un élément du dispositif de couverture par rapport à un autre, un élément destiné à être placé plus proche du bord inférieur de la toiture étant désigné par avant tandis qu'un élément destiné à être placé plus proche du sommet de la toiture étant désigné par arrière.

En se reportant aux figures 1 et 2, on observe des tuiles 11 selon deux variantes de réalisation, destinées à former un dispositif de couverture permettant de recouvrir une toiture végétalisée selon l'invention. Chaque tuile 11 présente un contour globalement rectangulaire. Chaque tuile 11 comporte une partie médiane 1 en creux qui est délimitée par un rebord avant 2 et un rebord arrière 3. La partie médiane 1 forme ainsi avec les rebords avant 2 et arrière 3 un espace de logement 12 apte à recevoir un substrat 5, tel que représenté sur la figure 2, recouvert par des végétaux 6, du genre sedum, par exemple.

La partie médiane 1 est sensiblement plane. En outre, comme représenté sur la figure 1, la surface supérieure de la partie médiane 1 destinée à recevoir le substrat 5 peut être équipée de rainures 4, parallèles aux rebords avant 2 et arrière 3, et ayant une fonction de rétention d'eau.

Les rebords avant 2 et arrière 3 se dressent perpendiculairement à la partie médiane 1 de telle sorte qu'ils constituent des moyens de retenue du substrat 5 permettant d'éviter son glissement lorsque la tuile 11 est disposée sur une toiture inclinée.

Le rebord avant 2 comporte une extrémité supérieure recourbée 2a faisant saillie vers l'avant et présentant une face inférieure 2b dont l'inclinaison et les dimensions sont identiques à celles de la face supérieure 3b du rebord arrière 3. Ainsi, comme représenté sur la figure 3, lorsque les tuiles 11 sont montées sur une structure porteuse de la toiture, les rebords avant 2 et arrière 3 en regard de deux tuiles adjacentes 11 s'emboîtent l'un dans l'autre et la face inférieure 2b de l'extrémité recourbée 2a dudit rebord avant 2 vient recouvrir la face supérieure 3b dudit rebord arrière 3 de manière à assurer un assemblage étanche.

Dans le mode de réalisation représenté sur la figure 1, le rebord arrière 3 comporte une extrémité supérieure 3a recourbée vers l'avant. Ainsi, le rebord arrière 3 ménage, entre la surface supérieure de la partie médiane 1 et l'extrémité supérieure 3a du rebord arrière 3, une cavité 13 dans laquelle est destiné à être logé un tuyau d'irrigation 10, par exemple équipé d'un dispositif goutte-à-goutte.

Les tuiles 11 sont des pièces céramiques, obtenues par cuisson d'argile. Sur les figures 1 et 2, les tuiles 11 sont de type creuse, c'est-à-dire comportant une pluralité d'alvéoles 14. Les alvéoles 14 s'allongent parallèlement aux rebords avant 2 et arrière 3 d'un bout à l'autre de la tuile 11. De telles alvéoles 14 permettent, d'une part, de faciliter le séchage des tuiles 11 lors de leur fabrication et d'autre part, de limiter la quantité de matière nécessaire à la fabrication des tuiles 11.

Dans le mode de réalisation représenté, seule la partie médiane est pourvue d'alvéoles. Toutefois, en fonction des épaisseurs des rebords avant 2 et arrière 3, il est également possible de ménager des alvéoles au niveau desdits rebords avant 2 et arrière 3. Les tuiles 11 sont réalisées par un procédé d'extrusion selon une direction d'extrusion qui est parallèle aux rebords avant 2 et arrière 3. Chaque tuile 11 est ainsi un élément monolithe, c'est-à-dire fait d'un seul bloc.

A titre d'exemple, chaque tuile 11 présente une longueur de 100 cm et une largeur de 60 cm.

Par ailleurs, on observe sur la figure 2 que deux joues 7, perpendiculaires aux rebords avant 2 et arrière 3, sont disposées latéralement de part et d'autre de la partie médiane 1 de chaque tuile 11. Les joues 7 permettent ainsi de fermer latéralement l'espace de logement 12 recevant le substrat 5. Les joues 7 définissent ici avec les rebords avant 2 et arrière 3 un espace de logement 12 qui présente une forme parallélépipédique. Une telle forme est particulièrement avantageuse en ce qu'elle permet de loger un substrat 5 ayant une épaisseur uniforme, ce qui contribue à assurer un enracinement satisfaisant des végétaux sur toute la surface du substrat 5.

Les joues 7 peuvent être des plaques rectangulaires réalisées en plastique. Selon un mode de réalisation, les joues 7 sont perforées de manière à permettre une évacuation latérale de l'eau, hors de l'espace de logement 12 recevant le substrat 5. Les joues 7 comportent chacune des plots de fixation 15, trois dans le mode de réalisation représenté, qui présentent chacun une forme complémentaire à l'une des alvéoles 14 de la tuile 11. Les plots de fixation 15 sont ainsi destinées à venir s'emboîter dans lesdites alvéoles 14 afin d'assurer une fixation des joues 7 aux tuiles 11.

En relation avec les figures 3 et 4, on décrira une toiture végétalisée comportant une structure porteuse et un dispositif de couverture comportant une pluralité de tuiles 11 selon la variante de la figure 3.

La structure porteuse comporte une pluralité de chevrons 16 qui s'étendent parallèlement les uns aux autres entre le sommet et le bas de la toiture. Les chevrons 16 supportent des profilés métalliques 17 qui s'étendent parallèlement les uns aux autres transversalement aux chevrons 16. Dans le mode de réalisation représenté, les profilés métalliques 17 présentent des profils en oméga dont les bords repliés sont fixés contre la face supérieure des chevrons 16.

Comme représenté sur la figure 3, le rebord arrière 3 de chaque tuile 11 comporte un appendice 18 présentant un profil en forme de T faisant saillie vers l'arrière. L'appendice 18 présente une portion inférieure 19 qui fait saillie vers le bas et qui est retenue contre l'un des profilés métalliques 17 de manière à assurer une retenue de la tuile 11 sur la structure porteuse. Par ailleurs, l'appendice 18 comporte un ergot 20 qui fait saillie vers le haut et qui présente une forme complémentaire à une rainure 21 ménagée dans une portion inférieure du rebord avant 2. Ainsi, l'ergot 20 d'une tuile 11 est apte à s'emboîter dans la rainure 21 d'une tuile 11 adjacente. Un tel assemblage par emboîtement entre les rebords avant 2 et arrière 3 assure une stabilité de l'assemblage des tuiles 11.

Comme représenté sur la figure 4, les tuiles 11 sont disposées selon une pluralité de rangées parallèles qui sont chacune alignées parallèlement aux chevrons 16 et sont séparées les unes des autres par des interstices 22. La structure porteuse comporte un profilé en U 23 qui est disposé en dessous de chacun des interstices 22, le long de celui-ci. La structure porteuse peut également comporter un profilé en U 23 qui est disposé, à chacune des extrémités de la toiture, le long du bord latéral de la rangée d'extrémité. Les profilés en U 23 visent à recueillir les eaux pluviales qui s'écoulent entre les rangées de tuiles 11 pour les conduire vers une gouttière 24. Chacun des profilés en U 23 est fixé entre deux chevrons 16.

L'agencement décrit ci-dessus est particulièrement avantageux en ce que, d'une part, les tuiles 11 définissent des volumes creux pouvant recevoir substrat 5 et sedum 6, et que, d'autre part, les tuiles 11 sont calées les unes contre les autres de sorte qu'elles sont stables et que la toiture ainsi réalisée est étanche aux eaux de pluie.

En relation avec les figures 7 et 8, on observe deux variantes de réalisation d'un élément de faitage en céramique recouvrant l'arête supérieure de la toiture.

La figure 7 représente un élément de faitage 25 comportant une surface supérieure 26 convexe dirigée vers le haut et deux bords 27, 28 venant recouvrir respectivement le rebord arrière 3 de l'une et l'autre des deux tuiles 11 adjacentes disposées de part et d'autre dudit élément de faitage 25. L'élément de faitage 25 comporte également au niveau de ses bords 27, 28 deux éléments faisant saillie vers le bas de telle sorte que les deux bords 27, 28 dudit élément de faitage 25 viennent coopérer par emboîtement de forme avec le bord arrière 3 de l'une et l'autre des deux tuiles 11 adjacentes.

La figure 8 représente un élément de faitage 29 qui reçoit également un substrat 30 recouvert de végétaux 31. L'élément de faitage 29 comporte deux rebords 32, 33 présentant une structure identique à celle du rebord avant 2 des tuiles 11 décrites ci-dessus. Ainsi, les deux rebords 32, 33 sont aptes à recouvrir respectivement le rebord arrière 3 de l'une et l'autre des deux tuiles 11 adjacentes bordant ledit élément de faitage 29. De plus, l'élément de faitage 29 comporte une partie médiane 34 en creux qui est délimitée par les deux rebords 32, 33. La partie médiane 34 forme ainsi avec les deux rebords 32, 33 un espace de logement apte à recevoir le substrat 30 recouvert de végétaux 31. Compte-tenu de l'inclinaison de la toiture, les deux rebords 32, 33 ne se dressent pas perpendiculairement à la partie médiane 34 mais présente une inclinaison correspondant à l'angle de la toiture à recouvrir.

Les figures 5 et 6 divulguent un autre mode de construction, sans joues et donc ne faisant pas partie de l'invention. Dans ce mode de réalisation, le rebord avant 2 et le rebord arrière 3 des tuiles 11 sont également pourvus d'alvéoles 35. En outre, l'extrémité supérieure 2a recourbée du rebord avant 2 est de forme rectangulaire, c'est-à-dire que ses faces inférieure et supérieure sont planes et parallèle. Le rebord arrière 3 est rectiligne de façon à venir s'emboiter dans le rebord avant 2 d'un élément adjacent.

La fixation des tuiles 11 sur la structure porteuse est assurée au moyen d'un crapaud 36, représenté de manière détaillée sur la figure 6. Le crapaud 36 comporte une platine métallique 37 dont l'une des extrémités est insérée à l'intérieure de l'une des alvéoles 15 de la tuile 11. La platine métallique 37 est fixée par un organe de fixation 38, tel qu'un ensemble boulon-écrou, à une plaque métallique 39 qui est fixés aux deux chevrons 42 bordant un profilé en U 23. Les deux chevrons 42 sont ici des profilés métalliques présentant un profil en U dont la concavité est dirigée en direction opposé au profilé en U 23. La fixation du crapaud 36 auxdits chevrons 42 est assurée en prenant en sandwich l'aile supérieure de chacun des chevrons 42 entre la plaque métallique 39 et une lame métallique 40 qui est reliée à la plaque métallique 39 par un organe de fixation 41, tel qu'un ensemble boulon-écrou.

La figure 9 représente une tuile, dans laquelle le rebord avant 2 est incliné vers l'avant par rapport à la partie médiane 1. L'inclinaison du rebord avant 2 par rapport à la partie médiane 1 est choisie en fonction de l'inclinaison de la toiture de telle sorte que le rebord avant présente une légère inclinaison, typiquement comprise entre 1 et 10 °, dans le même sens que l'inclinaison de la toiture. Dans ce mode de réalisation, en contrepartie d'un agencement favorisant l'écoulement d'eau, l'espace de logement 12 du substrat 5 ne présente pas une forme parallélépipédique de sorte que le substrat 5 ne peut présenter une épaisseur uniforme. En outre, le rebord avant 2 comporte une extrémité 43 recourbée vers le bas qui forme un crantage dirigé vers le bas apte à venir se positionner contre une face avant du rebord arrière 3.

La figure 10 représente un dispositif de couverture comprenant un assemblage étanche de tuiles 11 présentant une structure proche de celle de la figure 9. Les tuiles 11 différent de la tuile 11 de la figure précédente en ce que la face supérieure 46 du rebord arrière 3 présente une inclinaison par rapport à la partie médiane 1 identique à celle du rebord avant 2 de sorte que le rebord avant 2 viennent reposer contre la face supérieure 46 du rebord arrière 3 d'une tuile 11 adjacente, disposée vers l'avant, lorsque les tuiles 11 sont montées sur la structure porteuse de la toiture.

Les figures 11 à 13 représentent un dispositif de couverture selon un autre mode de réalisation qui ne fait pas partie de l'invention. Dans ce mode de réalisation, les tuiles 11 ne contribuent pas à l'étanchéité de la toiture. Chaque tuile 11 présente une section en forme de U et comporte un rebord avant 2, un rebord arrière 3 et une partie médiane 1 en creux. La partie médiane 1 est plane et les rebords avant 2 et arrière 3 se dressent perpendiculairement à la partie médiane 1.

Comme dans les modes de réalisation précédents, la partie médiane 1 forme avec les rebords avant 2 et arrière 3 un espace de logement 12 recevant un substrat 5 recouvert par des végétaux 6.

Toutefois, à la différence des modes de réalisation précédents, le rebord avant 2 ne comporte pas d'extrémité supérieure recourbée destinée à recouvrir le rebord arrière 3 d'une autre tuile 11. Ainsi, il existe, d'une part, des interstices 22 qui séparent les rangées de tuiles qui s'étendent de l'avant vers l'arrière de la toiture, et d'autre part, des interstices 47 propres à autoriser le passage de l'eau de pluie qui sont chacun formés entre le rebord avant 2 et le rebord arrière 3 en regard, de deux tuiles 11 adjacentes.

Aussi, afin d'assurer l'étanchéité de la toiture, c'est la structure porteuse qui, dans ce mode de réalisation, assure l'étanchéité. Pour ce faire, la structure porteuse comporte un ou plusieurs panneaux métalliques 48 qui sont assemblés de manière étanche les uns aux autres, par exemple par soudage. Les panneaux métalliques 48 sont supportés sur la charpente de la toiture. Comme représenté sur la figure 13, les panneaux métalliques 48 peuvent notamment être constitués de tôles ondulées dont les ondulations s'étendent entre l'avant et l'arrière de la toiture de sorte à autoriser l'écoulement de l'eau. Par ailleurs, la structure porteuse comporte un profilé en U 23 qui est disposé en dessous de chacun des interstices 22 séparant les rangées parallèles de tuiles 11. Comme pour les modes de réalisation précédents, les profilés en U 23 visent à recueillir les eaux pluviales qui s'écoulent entre les rangées de tuiles 11 pour les conduire vers une gouttière. Les profilés en U 23 sont fixés sur la structure porteuse au moyen d'une pluralité de plots 49 régulièrement réparties. Comme représenté sur la figure 13, les profilés en U 23 assurent également une fonction de support des tuiles 11 sur la structure porteuse.

Les figures 14 à 17 représentent une toiture végétalisée selon un autre mode de réalisation, où les joues s'emboîtant dans les alvéoles ne sont pas représentées. La toiture végétalisée comporte une pluralité de tuiles 11 monolithes extrudées. Chaque tuile 11 comporte une partie médiane en creux qui est délimité par un rebord avant 2 et un rebord arrière 3. La partie médiane 1 forme avec les rebords avant 2 et arrière 3 un espace de logement 12 apte à recevoir un substrat 5 recouvert par des végétaux 6. Les tuiles 11 sont de type creuse et comportent une pluralité d'alvéoles 14 qui s'allongent parallèlement aux rebords avant 2 et arrière 3 d'un bout à l'autre de la tuile 11. Les rebords avant 2 et arrière 3 sont disposés perpendiculairement à la pente de la toiture. Le rebord avant 2 et le rebord arrière 3 sont respectivement placés vers le bord inférieur et vers le sommet de la toiture.

Comme représenté sur la figure 16, un treillis 44 est avantageusement disposé dans l'espace de logement 12 des tuiles 11. Le treillis 44 est par exemple réalisé en métal ou en matière plastique et est constitué d'un assemblage de barres entrecroisées et fixées les unes aux autres. De tels treillis 11 créent des zones d'enracinement pour les végétaux 6 et permettent ainsi d'améliorer la retenue du substrat 5 à l'intérieur de l'espace de logement 12 des tuiles 11.

Dans une variante de réalisation, représentée sur la figure 17, des joues 7 sont fixées aux extrémités latérales du treillis 44, en plus des joues 7 (non représentées) fixées par des plots 15 dans les alvéoles 14. Les joues 7 sont disposées latéralement de part et d'autre de la partie médiane 1 de chaque tuile 11. Les joues 7 permettent ainsi de fermer latéralement l'espace de logement 12.

Dans ce mode de réalisation, les tuiles 11 ne contribuent pas à l'étanchéité de la toiture végétalisée. En effet, les tuiles 11 sont séparées les unes des autres, le long de leurs rebords avant 2 et arrière 3 comme le long de leurs bords latéraux par des interstices. Un tel agencement est avantageux en ce qu'il permet d'utiliser des tuiles 11 identiques dans les zones de la toiture qui sont planes comme dans celle présentant une courbure, tel que représenté sur la figure 14.

Dans une telle toiture, la structure porteuse comporte un revêtement étanche. Le revêtement étanche peut notamment être réalisé au moyen de panneaux de verre ou de plastique, de panneaux métalliques, de panneaux de bois recouvert d'un matériau bitumineux ou de béton, par exemple.

La fixation des tuiles 11 sur la structure porteuse est représentée sur la figure 15. Les deux bords latéraux de chacune des tuiles 11 sont chacun supportés par un support de fixation 45 qui est fixé à l'un des chevrons 16 de la toiture. Par ailleurs, deux crapauds 46 assurent la fixation de chacun des deux bords latéraux des tuiles 11 sur le support de fixation 45. Chaque crapaud 46 comporte deux lames flexibles 47 qui sont insérées dans l'une des alvéoles 14 de la tuile 11 et deux autres lames 48 qui sont disposées sous la tuile 11.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention définie par les revendications. L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Toiture végétalisée comportant une structure porteuse, un dispositif de couverture fixé sur la structure porteuse et une pluralité de substrats (5) recouverts par des végétaux (6) ; la toiture étant inclinée entre un bord inférieur et un sommet, le dispositif de couverture comportant une pluralité de tuiles (11) à contour rectangulaire; chaque tuile (11) comportant un rebord avant (2) et un rebord arrière (3) s'étendant selon des directions parallèles; le rebord avant et le rebord arrière étant respectivement placés vers le bord inférieur et vers le sommet de la toiture, chaque tuile (11) comportant, entre le rebord avant (2) et le rebord arrière (3), une partie médiane (1) en creux définissant avec les rebords avant (2) et arrière (3) un espace de logement (12) recevant le substrat (5) recouvert par des végétaux (6), ladite toiture étant **caractérisée en ce que** chaque tuile (11) est une tuile monolithe céramique extrudée selon une direction d'extrusion parallèle aux directions des rebords avant (2) et arrière (3), **en ce que** chaque tuile (11) comporte des alvéoles (14) s'étendant d'un bout à l'autre de la tuile (11) selon une direction parallèle aux directions des rebords avant (2) et arrière (3) et **en ce que** la toiture comporte en outre, pour chacune des tuiles (11), deux joues (7) fixées perpendiculairement aux rebords avant (2) et arrière (3), de part et d'autre de la portion médiane (1) et fermant latéralement l'espace de logement (12) apte à recevoir le substrat (5), chacune des joues (7) comportant des plots de fixation (15) s'emboitant chacun dans l'une des alvéoles (14).

2. Toiture végétalisée selon la revendication 1, dans lequel le rebord avant (2) de chaque tuile (11) étant apte à recouvrir le rebord arrière (3) d'une autre tuile (11) adjacente, disposée vers l'avant, de manière à assurer l'étanchéité du dispositif de couverture.

3. Toiture végétalisée selon la revendication 1 ou 2, dans laquelle la partie médiane (1) est plane et les rebords avant (2) et arrière (3) se redressent perpendiculairement à la partie médiane (1) de telle sorte que l'espace de logement (12) présente une forme parallélépipédique.

4. Toiture végétalisée selon l'une quelconque des revendications 1 à 3, dans laquelle le rebord avant (2) présente une extrémité recourbée (2a) faisant saillie vers l'avant et comportant une face inférieure (2b) qui présente une inclinaison identique à une face supérieure (3b) du rebord arrière (3), de telle sorte que ladite face inférieure (2b) de l'extrémité recourbée (2a) du rebord avant (2) est apte à venir reposer contre la face supérieure (3b) du rebord arrière (3) d'un autre tuile (11) adjacente, disposée à l'avant.

5. Toiture végétalisée selon l'une quelconque des revendications 1 à 4, dans laquelle le rebord arrière (3) comporte une portion de retenue (19) faisant saillie vers le bas qui est apte à coopérer avec un élément (17) de la structure porteuse de manière à assurer une retenue de ladite tuile (11) sur la structure porteuse.

6. Toiture végétalisée selon l'une quelconque des revendications 1 à 5, dans laquelle le rebord avant (2) présente une face inférieure pourvue d'une rainure (21) et le rebord arrière (3) comporte un ergot (20) qui fait saillie vers l'arrière depuis le rebord arrière (3) et présente une forme complémentaire à ladite rainure (21); ladite rainure (21) étant apte à s'emboîter avec l'ergot (20) du rebord arrière (3) d'une autre tuile (11) adjacente, disposée à l'avant.

7. Toiture végétalisée selon la revendication 1, dans laquelle la partie médiane (1) est plane et le rebord avant (2) est incliné vers l'avant par rapport à la partie médiane (1) et comporte une extrémité recourbée (43) vers le bas formant un crantage qui est apte à venir se positionner contre une face avant du rebord arrière (3) d'une autre tuile (11) adjacente, disposée à l'avant.

8. Toiture végétalisée selon l'une quelconque des revendications précédentes, dans lequel la partie médiane (1) est munie de rainures (4) s'étendant selon une direction parallèle aux rebords avant (2) et arrière (3).

9. Toiture végétalisée selon l'une quelconque des revendications 1 à 8, dans laquelle les tuiles (11) sont agencées sur la structure porteuse sous la forme d'une pluralité de rangées parallèles qui s'allongent selon des directions perpendiculaires aux direction des rebords avant (2) et arrière (3) et qui sont séparées les unes des autres par des interstices (22).

10. Toiture végétalisée selon l'une quelconque des revendications 1 à 9, dans laquelle la structure porteuse comporte un ou plusieurs panneaux (48) assurant l'étanchéité de la structure porteuse.

11. Toiture végétalisée selon l'une quelconque des revendications 1 à 10, dans laquelle un treillis métallique est disposé dans l'espace de logement de chacune des tuiles.

12. Toiture végétalisée selon la revendication 11, dans laquelle les joues sont fixées au treillis métallique.

## Patentansprüche

1. Gründach umfassend eine Tragestruktur, eine auf der Tragestruktur befestigte Abdeckvorrichtung und eine Vielzahl von mit Pflanzen bedeckten Substarten (5); wobei das Dach zwischen einem niedrigerem Rand und einem Höhepunkt geneigt ist, wobei die Abdeckvorrichtung eine Vielzahl von rechteckigen Ziegeln (11) umfasst; wobei jeder Ziegel (11) einen vorderen Rand (2) und einen hinteren Rand (3) umfasst, welche parallel verlaufen; wobei der vordere Rand und der hintere Rand jeweils zum niedrigeren Rand hin und zum Höhepunkt hin angeordnet sind, wobei jeder Ziegel (11) zwischen dem vorderen Rand und dem hinteren Rand einen vertieften Mittelbereich (1) umfasst, welcher mit dem vorderen Rand (2) und dem hinteren Rand (3) einen Aufnahmeraum (12) bildet, welcher das mit Pflanzen (6) bedeckte Substrat (5) aufnimmt, wobei das Dach **dadurch gekennzeichnet ist, dass** jeder Ziegel (11) ein extrudierter keramischer Monolith-Ziegel ist, wobei die Extrusionsrichtung parallel zu dem vorderen Rand und dem hinteren Rand ist, und dass jeder Ziegel (11) Hohlräume umfasst, welche sich von einem Ende zum anderen Ende des Ziegels (11) in einer parallelen Richtung zu dem vorderen (2) und hinteren (3) Rand erstrecken, und dass das Dach weiterhin für jeden Ziegel zwei Wangen (7), welche senkrecht an dem vorderen (2) und hinteren Rand (3) an der einen und der anderen Seite des Mittelbereichs (1) angebracht sind und den Aufnahmeraum (12) seitlich schließen, so dass dieser geeignet ist, das Substrat (5) aufzunehmen, umfasst, wobei jede Wange (7) Befestigungspole (15) umfasst, welche sich jeweils in die Hohlräume (14) einfügen.

2. Gründach gemäß Anspruch 1, wobei der vordere Rand (2) jedes Ziegels (11) dazu geeignet ist, den hinteren Rand (3) eines anderen angrenzenden Ziegels (11) abzudecken, welcher vorderseitig angeordnet ist, so dass die Dichtigkeit der Abdeckungsvorrichtung gewährleistet ist.

3. Gründach gemäß Anspruch 1 oder 2, wobei der Mittelbereich (1) plan ist und der vordere (2) und der hintere Rand (3) sich senkrecht zum Mittelbereich (1) aufrichten, so dass der Aufnahmeraum (12) quaderförmig ist.

4. Gründach gemäß einem der Ansprüche 1 bis 3, wobei der vordere Rand (2) ein gebogenes, nach vorne überstehendes Ende (2) aufweist und eine Unterseite (2b) umfasst, welche eine identische Neigung zur Oberseite (3b) des hinteren Randes (3) hat, so dass die Unterseite (2b) des gebogenen Endes (2a) des vorderen Rands dazu geeignet ist, sich gegen die Oberseite (3b) des hinteren Randes (3) eines anderen angrenzenden Ziegels (11), welcher vorderseitig angeordnet ist, zu legen.

5. Gründach gemäß einem der Ansprüche 1 bis 4, wobei der hintere Rand (3) ein Rückhaltestück (19) umfasst, welches nach unten übersteht und welches dazu geeignet ist, mit einem Element (17) der Tragestruktur zusammenzuwirken, so dass der Ziegel (11) auf der Tragestruktur zurückgehalten wird.

6. Gründach gemäß einem der Ansprüche 1 bis 5, wobei der vordere Rand (2) eine mit einer Rille (21) ausgestatteten Unterseite aufweist und der hintere Rand (3) einen Sporn (20) umfasst, welcher vom hinteren Rand (3) nach hinten übersteht und eine Komplementärform zur Rille (21) aufweist; wobei die Rille (21) dazu geeignet ist, sich mit dem Sporn des hinteren Randes (3) eines anderen angrenzenden Ziegels (11), welcher vorderseitig angeordnet ist, ineinanderzufügen.

7. Gründach gemäß Anspruch 1, wobei der Mittelbereich plan ist und der vordere Rand (2) in Bezug auf den Mittelbereich nach vorne geneigt ist und ein nach unten gebogenes Ende (43) aufweist, welches eine Rastung bildet, welche dazu geeignet ist, sich gegen eine vordere Seite des hinteren Randes (3) eines angrenzenden Ziegels, welcher vorderseitig angeordnet ist, zu legen.

8. Gründach gemäß einem der vorangegangenen Ansprüche, wobei der Mittelbereich (1) mit Rillen (4) ausgestattet ist, welche sich parallel zu dem vorderen Rand (2) und dem hinteren Rand (3) erstrecken.

9. Gründach gemäß einem der Ansprüche 1 bis 8, wobei die Ziegel (11) auf der Tragestruktur in Form einer Vielzahl von parallelen Reihen, welche sich senkrecht zu dem vorderen (2) und zu dem hinteren Rand (3) erstrecken und welche durch Zwischenräume (22) voneinander getrennt sind, angeordnet sind.

10. Gründach gemäß einem der Ansprüche 1 bis 9, wobei die Tragestruktur eine oder mehrere Platten (48) umfasst, welche die Dichtigkeit der Tragestruktur gewährleisten.

11. Gründach gemäß einem der Ansprüche 1 bis 10, wobei ein metallisches Gitterwerk in den Aufnahmeraum jeder Ziegel eingebracht ist.

12. Gründach gemäß Anspruch 11, wobei die Wangen an dem Gitterwerk befestigt sind.

## Claims

1. Green roof comprising a supporting structure, a covering system fixed on the supporting structure and a plurality of substrates (5) covered by plants (6); the roof being inclined between a lower edge and a top, the covering system comprising a plurality of rectangular-shaped tiles (11); each tile (11) comprising a front edge (2) and a rear edge (3) extending in parallel directions; the front edge and the rear edge being respectively placed towards the lower edge and towards the top of the roof, each tile (11) comprising, between the front edge (2) and the rear edge (3), a hollow central part (1) defining with the front edge (2) and rear edge (3) a housing space (12) receiving the substrate (5) covered by plants (6), said roof being **characterised in that** each tile (11) is a monolithic ceramic tile extruded in a direction of extrusion parallel to the directions of the front edge (2) and rear edge (3), **in that** each tile (11) comprises recesses (14) extending from one end to the other of the tile (11) in a direction parallel to the directions of the front edge (2) and rear edge (3) and **in that** the roof further comprises, for each of the tiles (11), two cheeks (7) fixed perpendicularly to the front edge (2) and rear edge (3), on either side of the central part (1) and laterally closing the housing space (12) which can receive the substrate (5), each of the cheeks (7) comprising fastening studs (15) each fitting into one of the recesses (14).

2. Green roof according to claim 1, in which the front edge (2) of each tile (11) can cover the rear edge (3) of another adjacent tile (11), positioned towards the front, so as to ensure the sealing of the covering system.

3. Green roof according to claim 1 or 2, in which the central part is flat and the front edge (2) and rear edge (3) rise perpendicularly to the central part (1) such that the housing space (12) presents a parallelepipedic shape.

4. Green roof according to any one of claims 1 to 3, in which the front edge (2) presents a curved end (2a) protruding towards the front and comprising a lower face (2b) which presents an identical inclination to an upper face (3b) of the rear edge (3), such that said lower face (2b) of the curved end (2a) of the front edge (2) can rest against the upper face (3b) of the rear edge (3) of another adjacent tile (11) positioned towards the front.

5. Green roof according to any one of claims 1 to 4, in which the rear edge (3) comprises a retaining part (19) protruding downwards which can cooperate with an element (17) of the supporting structure so as to ensure retention of said tile (11) on the supporting structure.

6. Green roof according to any one of claims 1 to 5, in which the front edge (2) presents a lower face provided with a groove (21) and the rear edge (3) comprises a lug (20) which protrudes backwards from the rear edge (3) and presents a shape complementary to said groove (21); said groove (21) being able to engage with the lug (20) of the rear edge (3) of another adjacent tile (11) positioned at the front.

7. Green roof according to claim 1, in which the central part (1) is flat and the front edge (2) is inclined forwards with respect to the central part (1) and comprises an end (43) curved downwards forming a notch which can be positioned against a front face of the rear edge (3) of another adjacent tile (11) positioned at the front.

8. Green roof according to any one of the preceding claims, in which the central part (1) is provided with grooves (4) extending in a direction parallel to the front edge (2) and rear edge (3).

9. Green roof according to any one of claims 1 to 8, in which the tiles (11) are arranged on the supporting structure in the form of a plurality of parallel rows which extend in directions perpendicular to the directions of the front edge (2) and rear edge (3) and which are separated from each other by interstices (22).

10. Green roof according to any one of claims 1 to 9, in which the supporting structure comprises one or more panels (48) ensuring the sealing of the supporting structure.

11. Green roof according to any one of claims 1 to 10, in which a wire mesh is positioned in the housing space of each of the tiles.

12. Green roof according to claim 11, in which the cheeks are attached to the wire mesh.
